# EUROPEAN PATENT APPLICATION

(11) **EP 1 594 330 A1**
(43) Date of publication of application: **09.11.2005**
(21) Application number: 04291153.7
(22) Date of filing: 04.05.2004
(51) Int. Cl.: H04Q 7/38

(54) **Methods for terminal assisted coordinated radio serving and interference avoidance in OFDM mobile communication system**

(71) Applicant: ALCATEL, 75008 Paris (FR)
(72) Inventor: Gerlach, Christian Georg, Dr., 71254 Ditzingen (DE)
(74) Representative: Rausch, Gabriele

(57) **Abstract**

Methods for coordinated radio serving and coordinated interference avoidance in a radio communication system employing multi-carrier techniques such as OFDM for the air interface communication between a network (N) and a plurality of user terminals (T1 to Tn), the network (N) comprising at least two base stations (NE1 and NE2) controlled by a radio network controller (NE3), the base stations having means for communication with the user terminals (T1 to Tn) located inside their cell service area (C1 and C2), in which a user terminal (T) moves from a first cell service area (C1), covered by an origin base station (NE1), to a service overlapping region (SHO), in which at least a second service cell area (C2), covered by the second base station (NE2), is also available.

## Description

The present invention relates to wireless communications systems, and more particularly, to methods for terminal assisted coordinated radio serving and interference avoidance in digital radio communication systems employing multiple sub-carriers, such as Orthogonal Frequency Division Multiplexing (OFDM) mobile communication systems.

Communication systems employing many sub-carriers, such as those that employ OFDM technology are currently used for the transmission of high-speed digital radio and television signals, e.g. Digital Audio Broadcasting (DAB) and Digital Video Broadcasting Terrestrial transmission mode (DVB-T) systems. Also, OFDM has become a widely accepted standard high bit rate transmission technique for the realization of wide-band air interfaces for wireless access to current local area networks (LAN), e.g. HiperLAN and IEEE WLAN standard systems. And, in the same way, the 3^{rd} Generation Partnership Project (3GPP), for the standardization of high-speed broadband wireless mobile communication systems, is recently considering the application of OFDM techniques for the air interface communication between the radio area network (RAN) and the user equipment (UE).

OFDM is sometimes called multi-carrier or discrete multi-tone modulation where the transmitted data is split into a number of parallel data streams, each one used to modulate a separate sub-carrier. In an OFDM system, the broadband radio channel is subdivided into a plurality of narrow-band sub-channels or sub-carriers being independently modulated with e.g. QPSK, 16 QAM, 64 QAM or higher modulation order allowing higher data rate per sub-carrier.

In general, a wireless communication system supporting a wireless communication service comprises a radio access network communicating via an air interface with the user terminals. More particularly, the radio access network comprises a plurality of base stations controlled by a radio network controller (RNC), the base stations being in charge of communicating with the user terminals which are located inside their cell service area.

As already well known in such cellular structures, generally the user terminal roams from one origin cell area to a destination cell area. At a point when the terminal approaches the border of its origin cell service area, and where the two neighbor cells overlap, a common CS (circuit-switched) or PS (packet-switched) service can substantially deteriorate due to neighbor cell interference. In order to increase the quality of the service received by the terminal in such interference areas, so called "soft handover" methods have been developed. When the user terminal moves away from this overlapping region and into the destination cell area, a "handover" process begins, by which the terminal releases the origin serving channels and continues communicating with the destination base station.

In CDMA systems for example, a soft handover procedure is used in which the user terminal establishes a communication channel with multiple base stations serving that overlapping area. When a terminal, served by the origin base station, approaches said base stations cell boundary, it measures the strongest interfering neighboring cell and after reporting gets allocated from the RNC via the base station an additional (different) code for that destination base station. The information then goes from the RNC over both (or more) base stations to the terminal and is combined there after demodulation and despreading.

However, soft handover-like scenarios and methods for wireless communication OFDM systems have not yet been defined. Further, in an OFDM system there are no different scrambling codes for the different base stations. Therefore, if the user terminal, which is receiving CS or PS data from a particular base station in a specific cell area using OFDM technology, moves to another cell area, the quality of the service at the cell border will substantially deteriorate until a proper handover process is carried out.

It is, therefore, the object of the invention to solve the aforesaid technical OFDM system problems and provide methods for improving the service quality for a user terminal receiving CS or PS data at the cell border in a mobile communication system using OFDM transmission technology.

The object is achieved, according to the invention, by a method for terminal assisted coordinated radio serving according to claim 1, and a method for terminal assisted coordinated interference avoidance according to claim 2.

It is also achieved by a mobile radio network according to claim 13, a user terminal according to claim 15, and a network element according to claim 16.

Advantageous configurations of the invention emerge from the dependent claims, the following description and the drawings. For example, it is seen advantageous that, by using the proposed invention, a more efficient use of the radio resources is done, specially for terminals located in the cell border region, and that the cell throughput can be increased. Also advantageous is that downlink interference in cell border areas is reduced thus improving both the quality of service experienced by the user and the coverage of the base station service. Another advantage is that, fast automated repeat request (ARQ) mechanisms such as hybrid automated repeat request (HARQ) can be used for packet traffic when the terminal is performing such a terminal assisted coordinated interference avoidance.

An embodiment example of the invention is now explained with the aid of Figures 1 to 5.
Fig. 1 shows an example of conventional sub-carrier mapping to user channels into an OFDM time-frequency grid.
Fig. 2 illustrates a block diagram of a conventional OFDM mobile communications system including the network and the user terminals.
Fig. 3 shows a method for terminal assisted coordinated radio serving and interference avoidance according to the invention.
Fig. 4 shows an exemplary time-frequency pattern, consisting of a number of different frequency sub-bands that change over the time, which can be assigned to a terminal for coordinated radio serving or interference avoidance according to the invention.
Fig. 5 shows exemplary time-frequency patterns, allocating the same sub-carriers over the time, which can be assigned to a terminal for coordinated radio serving or interference avoidance according to the invention.

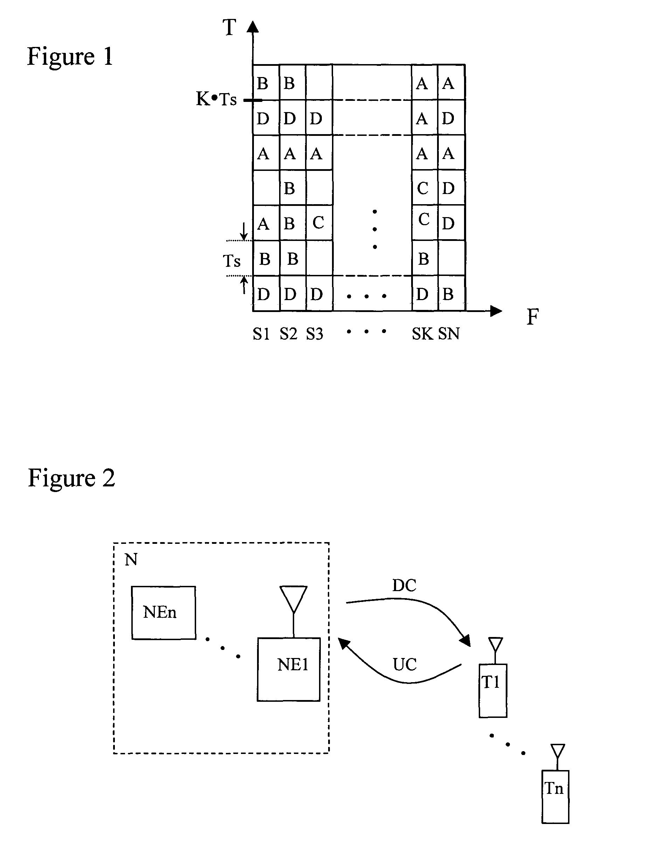

Figure 1 shows an exemplary allocation of sub-carriers S1 to SN to four user channels A, B, C and D in the OFDM time-frequency (T-F) grid.

OFDM offers the possibility to flexibly allocate one or more sub-carriers S1 to SN to one user or one logical channel A, B, C or D to control the data rate for this user channel. Since this can change also over time in a TDMA system (e.g. with a change period of K symbol periods Ts e.g. a period of 2ms), we have a 2-dimensional resource allocation grid, hereinafter referred as T-F grid, as indicated in Figure 1.

Some of the time-frequency grid locations may not be available for data transmission, because they are used for carrying pilot or signaling information. User assignment of remaining locations can be done based on frequency or time or a combination of both.

Figure 2 shows a block diagram of a mobile communications system in which a mobile radio network N, including a plurality of network elements NE1 to NEn, and a plurality of user terminals T1 to Tn exchange data information via an air interface downlink channel DC and an uplink channel UC using multi-carrier modulation schemes, at least in the downlink, such as OFDM. The network elements NE1 to NEn can be for example base stations, radio network controllers, core network switches, or any other communication elements which are generally used for wireless mobile communications.

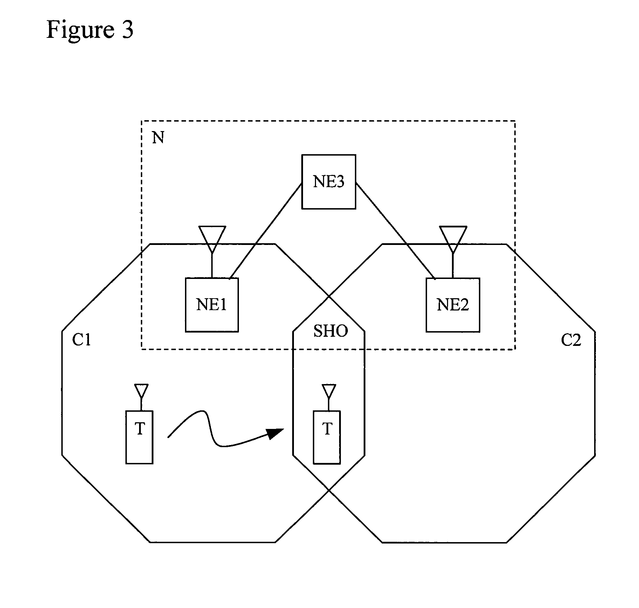

Figure 3 illustrates a method for terminal assisted coordinated radio serving and interference avoidance according to the invention in a "soft handover-like" scenario comprising a terminal T moving from a first cell service area C1, covered by an origin network element NE1, to a service overlapping "soft handover" region SHO, in which a second cell service area C2, covered by a neighbor network element NE2, is also available. Generally the service overlapping soft handover region SHO is located close to the cell border. Both network elements NE1 and NE2 which communicate via the air interface with terminal T will be hereinafter referred to as base stations and the network element NE3 in charge or supervising said base stations will be hereinafter referred as the radio network controller.

According to the invention the network N OFDM communication channel is designed so that pilot and, if needed, also signaling information channels can be received by the terminal T in parallel. This is achieved by assigning to each cell C1 and C2 pilots and, if needed, signaling in an interleaving non-overlapping manner, with pilot and signaling symbols having higher energy as the data. The terminal T can thus receive at least two pilot channels and, if needed, also two signaling channels in parallel, one for each cell service area overlapping in the soft handover region SHO. In the example of figure 3 the terminal T receives two pilot and possibly two signaling channels, one from the origin base station NE1 and another from the neighbor base station NE2.

The possibility to additionally receive two signaling channels in parallel is only needed if the terminal needs to communicate with the origin base station (NE1) and interfering base station (NE2) in parallel. This would be necessary in case the origin base station (NE1) and interfering base station (NE2) negotiate and decide alone without a radio network controller (NE3) about reservation and assignment of the time-frequency group for communication between the base stations and the terminal T.

Also according to the invention, the mobile radio network N partitions the OFDM T-F grid in a number of orthogonal, non-overlapping T-F patterns and combines them in a number of T-F groups, i.e., each T-F group consisting of a number of T-F patterns. The mobile radio network N also assigns each terminal one of said T-F groups for communication. Lets assume, for example, that the terminal T of figure 3 is scheduled on a determined T-F group.

When the terminal T moves to the cell border, inside the "soft handover" region SHO, it measures the pilot signal from the interfering neighbor base stations in that area and signals to the mobile radio network N information about the strength of reception from these and its origin base stations NE1 and NE2. Based on that information, the mobile radio network N tries to reserve and/or assign to terminal (T) the same T-F group in the origin base station NE1 and at least one of the interfering base stations NE2 involved in the interference scenario with the terminal T. For the reservation and assignment of the T-F group, the mobile radio network N takes into account factors such as the available T-F patterns or T-F groups, load situation in all involved cells, the service type, priority and quality of service the terminal is receiving from the network. It is therefore also possible that based on the available time-frequency patterns a new time-frequency group may be constructed and afterwards reserved.

At this point, the mobile radio network N, also based on information available in the network as mentioned above, can decide to carry out the method according to the invention in two different manners:
A. In case, for example, where the user terminal T receives a CS service from the network, e.g. is involved in a voice conversation, the mobile radio network N may coordinate the radio serving by using the involved base stations NE1 and NE2 for synchronized communication with the terminal. The data traffic is then forwarded from the radio network controller NE3 to the serving base stations NE1 and NE2, which will then transmit with the same T-F group and with the same information bearing signal in a synchronized fashion.
B. For the case, for example, where the terminal T receives a PS service from the network, e.g. involved in an internet session, the mobile radio network N may decide to coordinate interference by reducing the power transmitted by the interfering base stations NE2 in the T-F group associated to the terminal T, so that interference is sufficiently reduced.

In the first case (A) or coordinated radio serving scenario, the serving base stations NE1 and NE2 send the same information to the terminal T in a soft handover-like fashion and in a synchronized manner. The impulse responses of the two channels received add up and due to the increased level and increased diversity the signal level is raised up much above any interference so that the service received by the terminal T is improved in a wide region between the base stations.

In the second case (B) or coordinated interference scenario, the power will be reduced in the interfering base stations, for the reserved T-F group, to a level in which no substantial interference for the reception of data from the origin base station NE1 is created or just reduced to zero. Since in this T-F group the main interference came from the neighbor base stations NE2, said power reduction improves the signal-to-interference ratio (SIR) so that, even at the "soft handover" region SHO, i.e. at the cell border or beyond, the terminal T can be served only by the origin base station NE1. The neighbor base stations NE2 can still use this T-F group to schedule other terminals in their cells C2 but only with reduced power. These could be, e.g. terminals near to said base station antennas (in the inner circle of the cell C2) that strongly receive the signals from that base station NE2.

In order to average interference for user terminals in neighboring cells that are not using coordination in the "soft handover" overlapping region SHO and are therefore not scheduled on coordinated T-F groups, in a preferred embodiment of the invention the time-frequency pattern or time-frequency group assignments to these terminals are periodically changed, e.g. every change period of a number K of OFDM symbols, in a random or pseudo random manner. This shapes the produced inter-cell interference more evenly over all time frequency patterns.
In an alternative solution with the same aim the T-F groups that are used for terminals in uncoordinated transmissions may be constructed in different cells differently, that is, comprising different time-frequency patterns. Thus usage of one uncoordinated group e.g. in a cell C1 affects only few time-frequency patterns of another uncoordinated group in the neighborcell C2.

An important advantage of the second method or interference coordination method according to the invention is that it allows the origin base station NE1 alone to schedule the packets for the terminal T, so that the same data does not need to be transmitted from the radio network controller NE3 to other base stations NE2 in order to serve the terminal T as was done in the first soft handover-like method.. Further, since no other base station besides the origin base station NE1 is involved in the transmission of data packets to terminal T, this allows that efficient fast automated repeat request (ARQ) mechanisms such as hybrid automated repeat request (HARQ), which allows the receiver to inform the transmitter that certain packets were either not received or corrupted, can be used for retransmission of said corrupted packets from the origin base station NE1 to the terminal T.

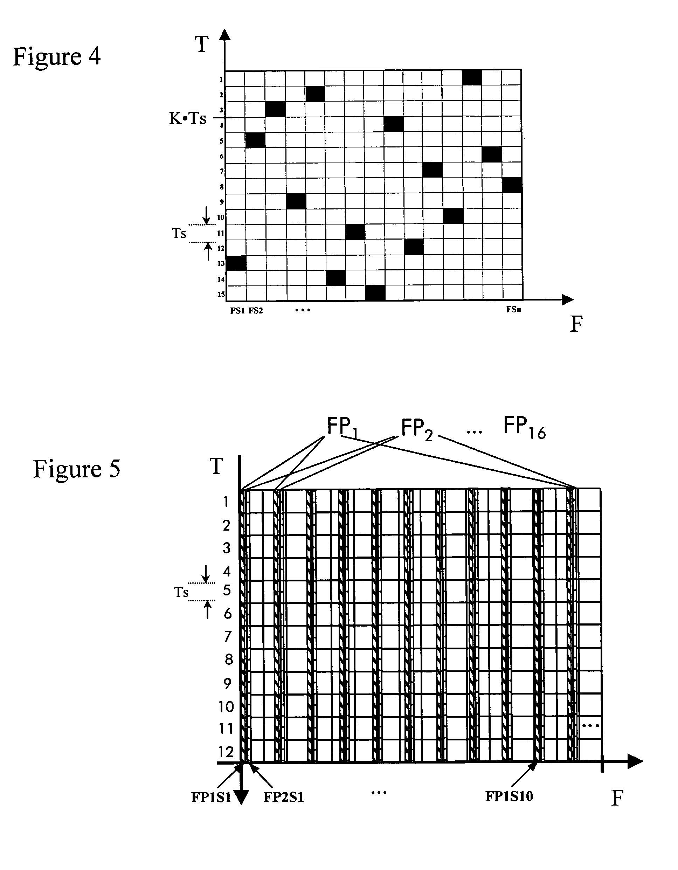

Fig. 4 shows one out of 15 possible T-F patterns in which the OFDM T-F grid can be partitioned, consisting of 15 different sub-carrier frequency sub-bands FS1 to FS15, each sub-band having 40 sub-carriers, and in which the frequency sub-bands are changed over the time.

One or more of such T-F patterns can be grouped to form a T-F group which can be assigned to a terminal T for communication with the mobile radio network N in a coordinated radio serving scenario (A) or coordinated interference avoidance scenario (B) according to the invention. This means that the usage of these T-F patterns in the invention requires time-synchronized base stations to guarantee orthogonality between different patterns if used by different base stations.

Fig. 5 shows another possibility of partitioning the OFDM T-F grid according to the invention. The figure shows two FP1 and FP2 out of 16 possible T-F patterns allocating always the same sub-carrier frequency sub-bands over the time. Because of the constant allocation of frequency sub-bands over the time these T-F patterns can be denoted just as frequency patterns.

The partitioning of the OFDM T-F grid so that the OFDM communication channel is designed so that two pilot channels can be received in parallel according to the invention will be hereinafter described by way of an example solution. For example, an OFDM system employing 704 sub-carriers, not considering the direct current(DC)-carrier, in a 5 MHz band and a number K=12 of OFDM symbols in a period Ts of 2 ms is looked at.

The pilot and signaling information can be placed every 12^{th} sub-carrier such as on the numbers 0, 12, 24, 36, 48, 60, 72 etc. up to 696. So, for example, every even OFDM symbol the sub-carriers 0, 24, 48, 72 etc. carry pilot information and the others 12, 36, 60, etc. signaling information while every odd OFDM symbol the sub-carriers 12, 36, 60, etc. carry pilot information and the others 0, 24, 48, etc. the signaling. In a neighboring cell, say C2, the pilot/signaling sub-carriers are shifted by one in the frequency direction such as 1, 13, 25, 37, 49, 61, 73, etc. up to 697. This configuration allows 12 shifts until the original locations are reached again. Thus 12 different interleaving non-overlapping pilot/signaling patterns are possible and can be distributed in an area so that neighboring cells never use the same pilot/signaling sub-carriers.

Since 16 x 44=704 then 16 frequency patterns FP1 to FP16 can be defined consisting of 44 sub-carriers each. The 44 sub-carriers can be placed, for example, in 11 frequency strips FPnS1 to FPnS11 spread across the frequency axis while each strip FPnSn contains 4 adjacent sub-carriers as indicated in Figure 5. The distance between strips FPnSn of the same frequency pattern FPn is then 16 x 4=64 sub-carriers, so, for example, the first frequency pattern FP1 contains the sub-carriers 0 to 3 allocated in its first frequency strip FP1 S1, 64 to 67 allocated in its second frequency strip FP1S2, 128 to 131 in the third frequency strip FP1S3,etc. According to the partition explained above, then each frequency pattern FP1 to FP16 contains at most 4 pilot or signaling sub-carriers in all its locations independent of the shift of the pilot pattern. So for data transmission there are always 40 of the 44 sub-carriers remaining in 12 OFDM symbols giving a total rate per each 2 ms block of 12 x 40 =480 complex sub-carrier symbols (480 QAM symbols) usable for data transmission.

Each basic frequency pattern (FP1 to FP16) occupies the same locations in all cells independent of the cell specific pilot pattern and further contains sufficient place in each pattern to accommodate for the specific sending cell pilot positions leaving at least always the basic number of time-frequency locations for the basic channel data rate of 480 complex sub-carrier symbols of such a pattern, so a basic Frequency pattern gets no interference from the sending cell pilots and just interference from neighboring cells with different pilot pattern and only maximally as much as amounts to the overhead place of 4 sub-carriers x 12 OFDM symbols left for sending pilot locations i.e. the difference between the total place of the Frequency pattern (44x12) and the basic number of time-frequency locations (40x12) for the basic channel data rate.

Said frequency patterns can be grouped in T-F groups which can be assigned to a terminal T for communication with the mobile radio network N in both, a coordinated radio serving scenario (A) or a coordinated interference scenario (B) according to the invention.

An advantage of the use of frequency patterns according to the invention is that, in case a coordinated interference avoidance method (B) is used for communication between the terminal T and the mobile radio network N, the base stations NE1 and NE2 do not need to be time synchronized, since the frequency pattern usage and the interference avoidance is not connected to a time-frame structure e.g. as shown in Figure 4. This is a very desirable feature since time synchronization of all base stations in a mobile radio network N is a substantial effort that is now advantageously avoided.

For the sake of generalization, it shall be understood, that although for the explanation of the present invention an OFDM modulation scheme has been used, the above proposals can in principle as well be adapted to any multi-carrier modulation scheme apart from OFDM.

It shall also understood that means to carry out the coordinated radio serving and interference methods herein described can be located anywhere in the mobile radio network N, that is, in a network element NE such as a base station or a radio network controller or by means of a radio resource manager entity, inside or outside the network elements NE, said means being implemented in a hardware and/or software form.

## Claims

1. Method for terminal assisted coordinated radio serving in a radio communication system employing multi-carrier techniques such as OFDM for the air interface communication between a network (N) and a plurality of user terminals (T1 to Tn), the network (N) comprising at least two base stations (NE1 and NE2) controlled by a radio network controller (NE3), the base stations having means for communication with the user terminals (T1 to Tn) located inside their cell service area (C1 and C2),
in which a user terminal (T) moves from a first cell service area (C1), covered by an origin base station (NE1), to a service overlapping region (SHO), in which at least a second cell service area (C2), covered by the second base station (NE2), is also available, **characterized in that**
- an OFDM wireless communication channel is designed so that the terminal (T) can receive at least two pilot channels in parallel, one for each service cell area overlapping in the service overlapping region (SHO),
- the mobile radio network (N) partitions an OFDM time-frequency grid in a number of orthogonal, non-overlapping time-frequency patterns, groups them in time-frequency groups, where a group contains at least one of said time-frequency patterns and assigns the user terminal (T) one of said time-frequency groups for communication,
- when the terminal (T) moves to the origin cell (C1) border, inside the service overlapping region (SHO), it measures the pilot signal from the interfering neighbor base stations **in that** area and signals to the mobile radio network (N) information about the strength of reception from these base stations (NE2) and its origin base station (NE1),
- based on the terminal (T) information and network criteria, the mobile radio network (N) tries to reserve and assign to terminal (T) the same time-frequency group in the origin base station (NE1) and at least one of the other base stations (NE2) serving in the overlapping region (SHO),
- the mobile radio network (N) uses at least two of said serving base stations (NE1 and NE2) for synchronized communication with the terminal in a way so that the network data traffic is forwarded by the radio network controller (NE3) to said serving base stations (NE1 and NE2), which will then transmit with the same time-frequency group and with the same information bearing signal in a synchronized manner.

2. Method for terminal assisted coordinated interference avoidance in a radio communication system employing multi-carrier techniques such as OFDM for the air interface communication between a network (N) and a plurality of user terminals (T1 to Tn), the network (N) comprising at least two base stations (NE1 and NE2) controlled by a radio network controller (NE3), the base stations having means for communication with the user terminals (T1 to Tn) located inside their cell service area (C1 and C2),
in which a user terminal (T) moves from a first cell service area (C1), covered by an origin base station (NE1), to a service overlapping region (SHO), in which at least a second cell service area (C2), covered by the second base station (NE2), is also available, **characterized in that**
- an OFDM wireless communication channel is designed so that the terminal (T) can receive at least two pilot channels in parallel, one for each service cell area overlapping in the service overlapping region (SHO),
- the mobile radio network (N) partitions an OFDM time-frequency grid in a number of orthogonal, non-overlapping time-frequency patterns, groups them in time-frequency groups, where a group contains at least one of said time-frequency patterns and assigns the user terminal (T) one of said time-frequency groups for communication,
- when the terminal (T) moves to the origin cell (C1) border, inside the service overlapping region (SHO), it measures the pilot signal from the interfering neighbor base stations **in that** area and signals to the mobile radio network (N) information about the strength of reception from these base stations (NE2) and its origin base station (NE1),
- based on the terminal (T) information and network criteria, the mobile radio network (N) tries to reserve for the terminal (T) the same time-frequency group in the origin base station (NE1) and at least one of the other base stations (NE2) serving in the overlapping region (SHO),
- the mobile radio network (N) continues sending data to terminal (T) only from the origin base station (NE1) using the time-frequency group associated to the terminal (T) and reduces the power transmitted by the other base stations (NE2) in this time-frequency group associated to the terminal (T) so that the interference is sufficiently reduced.

3. The method for coordinated interference avoidance of claim 2 **characterized in that** the origin base station (NE1) and the interfering base stations (NE2) are not time synchronized.

4. The method for coordinated interference avoidance of claim 2 **characterized in that** the mobile radio network (N) further uses an ARQ mechanism with the terminal (T), such as HARQ, to reschedule packets that were received in error when sent from the origin base station (NE1) to the terminal (T).

5. The method of claim 1 or 2 **characterized in that** the OFDM wireless communication channel is designed so that the terminal (T) can further receive at least two signaling channels in parallel.

6. The method of claim 1 or 2 **characterized in that** the reservation and assignment of the time-frequency group for communication between the mobile radio network (N) and the terminal (T) is done by the origin base station (NE1), and/or an interfering base station (NE2) and/or a radio network controller (NE3).

7. The method of claim 1 or 2 **characterized in that** for the reservation and assignment of the time-frequency group for communication between the mobile radio network (N) and the terminal (T), the mobile radio network (N) takes into account factors such as the available time-frequency patterns or groups, load situation in all involved cells, service type, priority and quality of service the terminal is receiving from the network.

8. The method of claim 1 or 2 **characterized in that** the time-frequency pattern or time-frequency group assignments to the terminals not scheduled in the coordinated transmission mode are periodically changed in a random or pseudo random manner so as to shape a caused inter-cell interference more evenly over the time-frequency pattern.

9. The method of claim 1 or 2 **characterized in that** the mobile radio network (N) partitions the OFDM time-frequency grid in a number of orthogonal, non-overlapping frequency patterns (FP1 to FP16) that use no frequency hopping.

10. The method of claim 9 **characterized in that** the OFDM system pilot channels received by the terminal (T) in different cells are designed in an interleaving non overlapping fashion with pilot symbols having higher energy as the data.

11. The method of claim 5 **characterized in that** the OFDM system pilot and signaling channels received by the terminal (T) in different cells are designed in an interleaving non overlapping fashion with pilot and signaling symbols having higher energy as the data.

12. The method of claim 9 **characterized in that** each basic frequency pattern (FP1 to FP16) occupies the same locations in all cells independent of the cell specific pilot pattern and further contains sufficient place in each pattern to accommodate for the specific sending cell pilot positions leaving at least always the basic number of time-frequency locations for the basic channel data rate of such a pattern, so that a basic frequency pattern gets no interference from the sending cell pilots and just interference from neighboring cells with different pilot pattern and only maximally as much as amounts to the overhead place left for sending pilot locations i.e. the difference between the total place of the frequency pattern and the basic number of time-frequency locations for the basic channel data rate.

13. A mobile radio network (N) **characterized in that** it comprises means for partitioning an OFDM time-frequency grid in a number of orthogonal, non-overlapping time-frequency patterns, and grouping them in time-frequency groups, where a time-frequency group contains at least one of said time-frequency patterns, and assigning a user terminal (T) one of said time-frequency groups for communication; means for receiving signaling information from the terminal (T) about strength of reception measurements on cell pilot signals, means for analyzing said information and for reserving and assigning to at least two base stations (NE1 and NE2) of the network (N) the same time-frequency group for communication with the terminal (T); and means for transmitting the same information bearing signal from the at least two neighboring base stations (NE1 and NE2) and in the same time-frequency group in a synchronized manner to a terminal (T), and/or means for transmitting in a time-frequency group only from a base station (NE1) and reducing the power transmitted in said time-frequency group from a neighbor base station (NE2).

14. The mobile radio network (N) of claim 13 **characterized in that** it further comprises means for carrying out an ARQ mechanism with the terminal (T) to reschedule packets that were received in error when sent from an origin base station (NE1) to the terminal (T).

15. A user terminal (T) **characterized in that** it comprises means for receiving at least two OFDM pilot channels and/or two OFDM signaling channels in parallel, means for negotiating a time-frequency group with a mobile radio network (N) for communication; means for measuring the OFDM pilot signal from interfering neighbor base stations (NE2) and for signaling said information to the mobile radio network (N).

16. A network element (NE) **characterized in that** it comprises means for partitioning an OFDM time-frequency grid in a number of orthogonal, non-overlapping time-frequency patterns, and grouping them in time-frequency groups, where a T-F group contains at least one of said time-frequency patterns, and assigning a user terminal (T) one of said T-F groups for communication; means for receiving signaling information from the terminal (T) about strength of reception measurements on cell pilot signals, means for analyzing said information and for reserving and assigning to another network element of the network (N) the same time-frequency group for communication with the terminal (T); and means for transmitting the same information bearing signal as another neighboring network element and in the same time-frequency group in a synchronized manner to a terminal (T), and/or means for reducing the power transmitted in a time-frequency group already assigned by a neighbor network element for communication with a terminal (T).
